# EUROPÄISCHE PATENTSCHRIFT

(11) **EP 4 677 814 B1**
(45) Veröffentlichungstag und Bekanntmachung des Hinweises auf die Patenterteilung: **29.04.2026**
(21) Anmeldenummer: 24720133.8
(22) Anmeldetag: 16.04.2024
(51) Int. Cl.: H04L 12/413

(54) **VERMITTLER UND AUTOMATISIERUNGSSYSTEM**
MEDIATOR AND AUTOMATION SYSTEM
MÉDIATEUR ET SYSTÈME D'AUTOMATISATION

(30) Priorität: 17.04.2023 DE 102023109608
(43) Veröffentlichungstag der Anmeldung: 14.01.2026
(73) Patentinhaber: Beckhoff Automation GmbH, 33415 Verl (DE)
(72) Erfinder: BÖSE, Sebastian, 33397 Rietberg (DE); ARNHOLD, Ralf, 63743 Aschaffenburg (DE); PETROVIC, Sebastian, 32257 Bünde (DE); SCHLOTTHAUER, Daniel, 13127 Berlin (DE); BRUNS, Benjamin, 29221 Celle (DE)
(74) Vertreter: Patentanwaltskanzlei WILHELM & BECK
(86) Internationale Anmeldenummer: PCT/EP2024/060287
(87) Internationale Veröffentlichungsnummer: WO 2024/218084

(56) Entgegenhaltungen:
- WO-A1-2022/182771
- US-A1- 2019 280 952
- US-A1- 2022 276 627

## Beschreibung

Die Patentanmeldung beansprucht die Priorität der deutschen Patentanmeldung 10 2023 109 608.7.

Die Erfindung betrifft einen Vermittler und ein Automatisierungssystem mit einem solchen Vermittler.

Moderne Konzepte der Industrie- und Prozessautomation, d. h. der Steuerung und Überwachung von technischen Prozessen mit Hilfe von Software, beruhen auf der Idee einer Zentralsteuerung bei gleichzeitig verteilter Sensor-/Aktorebene. Ein Netzwerk, im Weiteren auch Feldbussystem genannt, verbindet dabei die Feldgeräte wie Messfühler (Sensoren) und Stellglieder (Aktoren) mit der Zentralsteuerung.

Damit die Netzwerkteilnehmer, d.h. die Feldgeräte und die Zentralsteuerung, Nachrichten über den Feldbus austauschen können, wird für die Nachrichtenübertragung zwischen den Teilnehmern ein normiertes Protokoll, im Weiteren als Feldbus-Protokoll bezeichnet, verwendet, das festlegt, wer (Kennung) was (Messwert, Befehl) wann (Initiative) auf dem Feldbus ausgibt.

Der am weitesten verbreitete Standard für ein Netzwerk-Protokoll ist das Ethernet, mit dem sich Nachrichtenpakete, im Weiteren auch als Ethernet-Telegramm bezeichnet, mit Nutzdaten bis zu einer Länge von 1500 Bytes mit einer Übertragungsrate bis in den Gigabit/s-Bereich übertragen lassen.

Das Ethernet-Protokoll wurde zuerst bei Bürokommunikationsnetzwerken eingesetzt. Aufgrund der Vorteile des Ethernet-Konzepts, die sich aus der Nutzung von Standard-Hardware- und -Softwarekomponenten sowie der Möglichkeit, auch bei einfacher Vernetzungstechnologie hohe Übertragungsraten zu erreichen, ergeben, hat sich die Ethernet-Protokoll in der Zwischenzeit auch in der der Industrie- und Prozessautomation durchgesetzt. In der Industrie- und Prozessautomation werden unterschiedliche Feldbustechnologien verwendet, die sich in Bezug auf die Verbindungsstruktur, den Buszugang und das verwendete Ethernet-Feldbus-Protokoll unterscheiden. In vielen Fertigungsanlagen stellt sich deshalb die Anforderung, die eingesetzten Feldbustechnologien zu einer gemeinsamen Feldbuslösung zu verbinden.

Bei Ethernet basierten Feldbussystemen sind die Feldgeräte in der Regel über einen als Switch ausgebildeten Vermittler der eine Mehrzahl von Anschluss-Schnittstellen, im Weiteren auch als Ports bezeichnet, aufweist, mit der Zentralsteuerung verbunden. Mit Hilfe des Switches können auch verschiedene Ethernet-Feldbus-Protokolle gleichzeitig übertragen werden. Die Information, an welchen Port ein Ethernet-Telegramm weitergeleitet werden soll, wird vom Switch anhand der Ethernet-Adresse oder des VLAN-Tags entschieden, die in den Ethernet-Feldbus-Protokollen vorgesehen ist. Dabei sind auch Broadcastoder Multicast-Adressen möglich, bei denen der Switch ein Ethernet-Telegramm dann an mehrere Ports weiterleitet.

In einem Switch kann es störend sein, wenn durch Querverkehr, Zusatzdienste, nicht unterbrechbare Telegramme, Switch-Architektur, etc. die Ethernet-Kommunikation verzögert wird. Des Weiteren muss ein Ethernet-Telegramm, das vom Switch weitergeleitet werden soll, immer mindestens 64 Byte lang sein, auch dann, wenn ein Feldgerät nur wenige Bytes Nutzdaten zyklisch übertragen will.

Zur direkten Anbindung von Sensoren und Aktoren an das Automatisierungssystem werden in der Regel Analogschnittstellen oder Feldbusse wie I/O-Link oder HART (Highway Addressable Remote Transducer) eingesetzt, die aber im Vergleich zu Ethernet eine eingeschränkte Übertragungsrate besitzen. Mit der fortschreitenden Digitalisierung und Anlagenüberwachung steigt aber die Datenmenge von Sensoren und Aktoren im Automatisierungssystem an, die insbesondere in der Prozessautonation auch über lange Distanzen übertragen werden muss.

Mit dem Ethernet Advanced Physical Layer, im Weiteren auch als Ethernet-APL bezeichnet, wurde der Ethernet-Standard IEEE 802.3 um eine Kommunikationstechnologie für lange Distanzen erweitert, bei der ein eigensicheres zweiadriges Ethernet-Kabel verwendet werden kann, mit dem ein einfacher 2-Draht-Anschluss von Feldgeräten möglich ist.

Ethernet-APL stellt im OSI-Referenzmodell eine erweiterte physikalische Schicht (Bitübertagungsschicht) für Single-Pair-Ethernet (SPE) dar, die auf 10BASE-T1L erfolgt. Ethernet-APL kann über Kabellänge von bis zu 1000 m mit 10 MBit/s, Vollduplex, kommunizieren. Dabei unterstützt Ethernet-APL übergeordnete Ethernet-Protokolle wie EtherNet/IP, HART-IP, OPC-UA, PROFINET.

Schnelle, auf Ethernet basierte Feldbussysteme, im Weiteren auch als Industrial-Ethernet bezeichnet, verwenden für Übertragungsraten vom mehr als 10 Mbit/s in der Regel Twisted-Pair-Kabel mit wenigstens 4 Adern als physikalische Schicht zur Ethernet-Telegramm-Übertragung. Um Komponenten für 10 MBit/s mit Komponenten für mehr als 10 MBit/s, beispielsweise 100 Mbit/s oder 1 Gbit/s kombinieren zu können, werden Vermittler, eingesetzt, die eine Protokollumsetzung zwischen den unterschiedlichen physikalischen Schichten ermöglichen.

Für die Nutzung von Ethernet-APL müssen die eingesetzten Feldgeräte zusätzliche Eigenschaften und Funktionen erfüllen. Neben einer entsprechenden physischen Konnektivität durch Steck- oder Klemmverbinder sowie Eigenschaften für die Einhaltung des Explosionsschutzes, benötigen die eingesetzten Feldgeräte auch ergänzende bzw. angepasste Software. Grundsätzlich ist es deshalb wünschenswert, Ethernet-APL fähige Feldgeräte mit herkömmlichen Feldgeräten kombinieren zu können.

Aus der WO 2022/182771 A1 ist die Verwendung von Daten für verschiedene Typen von Ethernet bekannt. Ein Teilnehmer verfügt dabei über mehrere Ethernet-Schnittstellen, u.a. über eine Schnittstelle für Industrial-Ethernet mit einer Übertragungsrate von mehr als 10 Mbit/s über SPI, und über eine Schnittstelle für Ethernet APL (10 Base-T1L) mit einer Übertragungsrate von 10 Mbit/s auf einem Single-Pair-Ethernet (SPE)-Kabel. Das Industrial Ethernet sendet über SPI Daten und interpretiert Industrial Ethernet Dienste. Das Ethernet APL sendet über SPE Daten und interpretiert Ethernet APL Dienste. Der Teilnehmer entscheidet, welche Daten über welche Schnittstellen transportiert und verarbeitet werden.

Aufgabe ist es, einen Vermittler und ein Automatisierungssystem bereitzustellen, mit denen sich in ein Industrial-Ethernet-Feldbussystem Ethernet-APL-Feldgeräten einfach integrieren lassen.

Die Aufgabe wird mit einem Vermittler und einem Automatisierungssystem gemäß den unabhängigen Ansprüchen gelöst. Bevorzugte Weiterbildungen sind in den abhängigen Ansprüchen angegeben.

Ein Vermittler weist eine erste Anschluss-Schnittstelle für einen ersten Ethernet-Medientyp, der ein Industrial-Ethernet mit einer Übertragungsrate von mehr als 10 Mbit/s ist, und eine mit der ersten Anschluss-Schnittstelle verbundene erste Anschalteinheit für den ersten Ethernet-Medientyp auf. Ferner umfasst der Vermittler wenigstens eine zweite Anschluss-Schnittstelle für einen zweiten Ethernet-Medientyp, der ein Ethernet APL (10 Base-T1L) mit einer Übertragungsrate von 10 Mbit/s auf einem Single-Pair-Ethernet (SPE)-Kabel ist, und eine mit der wenigstens einen zweiten Anschluss-Schnittstelle verbundene zweite Anschalteinheit für den zweiten Ethernet-Medientyp. Im Vermittler ist weiterhin eine Vermittler-Steuereinheit, die ein Industrial-Ethernet-Protokollmodul enthält, wenigstens ein Ethernet-APL-Protokollmodul und ein mit dem Industrial-Ethernet-Protokollmodul und dem wenigstens einen Ethernet-APL-Protokollmodul verbundenes Übersetzer-Modul aufweist, eine erste SPI (Serial Peripheral Interface)-Schnittstelle, die die ersten Anschalteinheit mit dem Industrial-Ethernet-Protokollmodul der Vermittler-Steuereinheit verbindet, und eine weitere SPI-Schnittstelle, die die zweite Anschalteinheit mit dem wenigstens einen Ethernet-APL-Protokollmodul der Vermittler-Steuereinheit verbindet, vorgesehen. Die erste Anschalteinheit verarbeitet Industrial-Ethernet-Daten aus von ersten Anschluss-Schnittstelle übertragenen Industrial-Ethernet-Telegrammen und tauscht die Industrial-Ethernet-Daten über die erste SPI-Schnittstelle mit dem Industrial-Ethernet-Protokollmodul der Vermittler-Steuereinheit aus. Das Industrial-Ethernet-Protokollmodul interpretiert die über die erste SPI-Schnittstelle zur Verfügung gestellten Industrial-Ethernet-Daten und ordnet die Industrial-Ethernet-Daten Industrial-Ethernet-Diensten zu. Die wenigstens eine zweite Anschalteinheit verarbeitet Ethernet-APL-Daten aus von der wenigstens einen zweiten Anschluss-Schnittstelle übertragenen Ethernet-APL-Telegrammen und tauscht die Ethernet-APL-Daten über die weitere SPI-Schnittstelle mit dem wenigstens einen Ethernet-APL-Protokollmodul der Vermittler-Steuereinheit aus. Das wenigstens eine Ethernet-APL-Protokollmodul interpretiert die über die weitere SPI-Schnittstelle zur Verfügung gestellten Ethernet-APL-Daten und ordnet die Ethernet-APL-Daten Ethernet-APL-Diensten zu. Das Übersetzer-Modul verbindet die Industrial-Ethernet-Dienste und die Ethernet-APL-Dienste miteinander und koordiniert die Industrial-Ethernet-Dienste und die Ethernet-APL-Dienste zeitlich.

Der Vermittler ermöglicht es, dass von einer Zentralsteuerung die Nutzdaten für Ethernet-APL-Feldgeräte, die an den Vermittler angeschlossen sind, gesammelt in einem Ethernet-Telegramm übertragen werden. Für jedes Ethernet-APL-Feldgerät ist weder ein Header beziehungsweise ein Trailer noch eine minimale Telegrammgröße von 64 Byte erforderlich. Das spart Telegrammverkehr und erhöht damit auch die Performance des Automatisierungssystems. Im Vermittler sind die beiden Ethernet-Medientypen durch die zwischengeschaltete Vermittler-Steuereinheit vollständig voneinander getrennt. Die Regelung des Datenaustausches zwischen der ersten Anschluss-Schnittstelle, im Weiteren auch als Industrial-Ethernet-Port bezeichnet, und der zweiten Anschluss-Schnittstelle, im Weiteren auch als Ethernet-APL-Port bezeichnet, wird durch die Vermittler-Steuereinheit geregelt, wodurch ein hoher Determinismus erreicht wird. Die Vermittlerauslegung verhindert so Störungen durch Querverkehr, insbesondere dann, wenn mehrere Ethernet-APL-Ports vorgesehen sind.

Das Übersetzer-Modul im Vermittler kann Dienste-Filter aufweisen, die eine einfache Zuordnung zwischen den Industrial-Ethernet-Diensten des Industrial-Ethernet-Protokollmoduls und den Ethernet-APL-Diensten des Ethernet-APL-Protokollmoduls ermöglichen.

Im Übersetzer-Modul der Vermittler-Steuereinheit kann eine Firewall integriert sein, um unerwünschte Kommunikation zu filtern und/oder zu verhindern. Hierdurch kann eine verbesserte Sicherheit erreicht werden. Sämtliche Kommunikation und Dienste zum Ethernet-APL-Feldgerät laufen über die Vermittler-Steuereinheit und damit über die Firewall. Es gibt keine Möglichkeit, über eine andere Verbindung die Ethernet-APL-Feldgerät zu erreichen.

Für die Ethernet-APL-Kommunikation zu den Ethernet-APL-Feldgeräten können im Ethernet-APL-Protokollmodul des Vermittlers unterschiedlichste übergeordnete Ethernet-Protokolle wie EtherNet/IP, HART-IP, OPC-UA, PROFINET etc. verwendet werden, was eine hohe Flexibilität garantiert.

In dem Vermittler kann eine EtherCAT-Anschalteinheit als erste Anschalteinheit verbaut sein, die die EtherCAT-Daten aus den auf dem internen Ethernet-Klemmenbus durchlaufenden Ethernet-Telegrammen aufbereitet und über die erste SPI-Schnittstelle der Vermittler-Steuereinheit zur Verfügung stellt. Im Industrial-Ethernet-Protokollmodul wird dann weiter das EtherCAT-Protokoll verwendet. Der Vermittler bildet so einen EtherCAT-Arbeitsknoten und stellt weiterhin für die Feldebene ein oder mehrere Ethernet-APL-Ports, an die jeweils ein oder mehrere Sensoren beziehungsweise ein oder mehrere Aktoren angeschlossen werden können, bereit.

Durch die Ausgestaltung des Vermittlers als Reihenklemmen wird eine hohe Portdichte und ein kompakter Bauraum erreicht. Durch die Integration des Vermittlers in ein Reihenklemmen-Gehäuse wird eine modulare und flexible Integration des Ethernet-APL erreicht.

Die Mehr-Port-Reihenklemme bietet die Möglichkeit, über Klemmenschlüsse Ethernet-APL fähige Feldgeräte an ein Automatisierungssystem, das ein Industrial-Ethernet mit Übertragungsraten von mehr als 10 MBit/s einsetzt und dabei Twisted-Pair-Kabel mit wenigstens 4 Adern oder starre Verbindungen mit wenigstens 4 Leitern zur Ethernet-Telegramm-Übertragung als physikalische Schicht nutzt, anzubinden.

Mit einem Klemmenstrang, der den Vermittler als Reihenklemme umfasst, lassen sich beliebige Reihenklemmen betreiben, sodass Signale von Feldgeräten außer mit Ethernet-APL als physikalischer Schicht auch mit anderen physikalischen Schichten wie IO-Link oder HART erfasst werden können. Es ist eine Kombination mit weiteren Klemmen-Typen möglich, was eine einfache Integration in bestehende Anlagen und eine modulare Erweiterbarkeit gewährleistet.

Im Automatisierungssystem können von einem Server-Teilnehmer als der Zentralsteuerung bis zum Vermittler als Client-Teilnehmer die Nutzdaten gesammelt übertragen werden. Für das einzelne Feldgerät sind deshalb im Ethernet-Telegramm keine Headerinformationen und damit auch keine minimale Ethernet-Telegrammgröße von 64 Byte erforderlich. Das spart Datenverkehr und erhöht die Performance.

In dem Automatisierungssystem kann eine Busklemmeneinheit vorgesehen sein, die einen Buskoppler und eine Anzahl von Reihenklemmen aufweist, wobei der Vermittler eine Reihenklemme ist. In der Busklemmeneinheit können Busklemmen mit unterschiedlichsten Signalarten, so auch Ethernet-APL mit dem Vermittler beliebig aneinandergereiht werden. Auch der Austausch einzelner Busklemmen oder die nachträgliche Erweiterung der Busklemmeneinheit ist möglich.

Nachfolgend wird die Erfindung anhand von Figuren näher erläutert.
Fig. 1 zeigt ein Automatisierungssystem mit einem Vermittler.
Fig. 2 zeigt den schematischen Aufbau des Vermittlers im Automatisierungssystem aus Fig. 1.
Fig. 3 zeigt den schematischen Aufbau der Vermittler-Steuereinheit des Vermittlers aus Fig. 2.
Fig. 4 zeigt eine Reihenklemmenanordnung zum Einsatz im Automatisierungssystem aus Fig. 1.

Die Figuren sind lediglich schematischer Natur und nicht maßstabsgetreu. Ferner sind die Bezugszeichen in den Figuren unverändert gewählt, wenn es sich um gleich ausgebildete Elemente oder Komponenten handelt.

In der Industrie- und Prozessautomation werden Netzwerke verwendet, um verteilt angeordnete Feldgeräte einer Sensor-/Aktorebene mit einer Zentralsteuerung zu verbinden. Die Automatisierungsnetzwerke weisen in der Regel einen seriellen Bus, im Weiteren auch Feldbus genannt, auf, an dem die Netzwerkteilnehmer angeschlossen sind.

In Automatisierungsnetzwerken werden von den Herstellern verschiedene Feldbuskonzepte eingesetzt, die sich in Bezug auf die Verbindungsstruktur, den Buszugang und das normierte Feldbus-Protokoll unterscheiden.

Das Feldbus-Protokoll legt dabei fest, wie der Datenaustausch zwischen den Teilnehmern am Feldbus durchgeführt werden soll. Dabei bestimmt das Feldbus-Protokoll die Regeln und Formate für das Kommunikationsverhalten der Teilnehmer. Das Feldbus-Protokoll hat in der Regel eine Schichtenarchitektur, wobei die einzelnen Protokollschichten im OSI-Referenzmodell definiert sind.

Der vom Feldbus-Protokoll festgelegte Nachrichtenaufbau enthält alle für den Datenaustausch wichtigen Informationen, wie Absender und Empfänger, Nachrichtentyp, Nachrichtengröße und Prüfsumme zum Nachvollziehen einer fehlerfreien Übertragung. Diese Informationen werden den Nutzdaten in der Nachricht als Header vorangestellt oder als Trailer angehängt.

Als Kommunikationsstandard für Feldbussysteme hat sich das Ethernet-Protokoll etabliert. Im Rahmen des OSI-Schichtenmodells legt das Ethernet-Protokoll die beiden untersten Protokollschichten, die Bitübertragungsschicht, im Weiteren auch als physikalische Schicht bezeichnet, und die Sicherungsschicht fest. Für die Datenübertragung in den höheren Protokollschichten können beim Ethernet-Konzept Standard-Kommunikationsprotokolle wie das TCP/IP-Protokoll eingesetzt werden.

Das Ethernet-Protokoll unterteilt die zu übertragenden Daten in Frames, im Weiteren auch als Telegramme bezeichnet, deren Aufbau im Standard IEEE 802.3 festgelegt ist. Dem Ethernet-Telegramm sind eine Präambel und ein Startbit, das sogenannte Start Frame Delimiter SFD, vorgeschaltet. Daran schließt sich das eigentliche Ethernet-Telegramm an. Das Ethernet-Telegramm setzt sich aus einem Kopfabschnitt, dem Header, einem Nutzdatenblock und einem Endabschnitt, dem Trailer, zusammen.

Der Header startet mit einem 6-Byte-Feld für die Zieladresse, an das sich ein weiteres 6-Byte-Feld mit der Quelladresse anschließt. Dann kann ein weiteres 4-Byte-Feld, das sogenannte VLAN-Tag mit zusätzlichen Steuerdaten im Header folgen, das insbesondere Priorisierungsinformationen enthält. Der Header schließt mit einem 2-Byte-Feld, dem sogenannte Type-Feld, ab, welches Auskunft gibt über das Protokoll, mit dem die Daten im Nutzdatenblock zu verarbeiten sind.

Der sich an den Header anschließende Nutzdatenblock kann eine Länge von 1500 Bytes aufweisen, wobei in verschiedenen Ethernet-Protokoll-Erweiterungen auch größere Datenblöcke erlaubt sind. Der Nutzdatenblock wird dabei von einem in der Länge variablen Feld, dem sogenannten PAD-Feld abgeschlossen, das die festlegte Mindestlänge von 64 Byte des Ethernet-Telegramms garantiert.

An den Nutzdatenblock schließt der Trailer an, der ein 4-Byte-Feld mit einer Prüfsumme aufweist. Wenn ein Ethernet-Telegramm erstellt wird, wird eine CRC-Berechnung über die Bitfolge durchgeführt und die Prüfsumme an den Datenblock angehängt. Der Empfänger führt nach dem Empfang die gleiche Berechnung aus. Stimmt die empfangene Prüfsumme nicht mit der selbst berechneten Prüfsumme überein, geht der Empfänger von einer fehlerhaften Übertragung aus.

In der Industrie- und Prozessautomation werden auch Echtzeitlösungen des Ethernet-Protokolls eingesetzt. Echtzeitfähige Feldbussysteme, die auf dem Ethernet-Standard basieren, sind beispielsweise PROFINET, EtherCAT, Powerlink oder SERCOS III. Das jeweils eingesetzte echtzeitfähige Protokoll, mit dem die Daten im Nutzdatenblock zu verarbeiten sind, wird im Type-Feld im Header des Ethernet-Telegramms angezeigt.

Feldbussysteme, deren Nachrichtenübertragung auf der Basis des Ethernet-Protokolls erfolgt, werden oft in Form von Server-Client-Systemen betrieben. Der Server-Teilnehmer im Feldbussystem ist die Zentralsteuerung, die die Buszugriffsberechtigung besitzt und Daten auf den Feldbus ausgeben kann. Die Client-Teilnehmer im Feldbussystem sind die Feldgeräte, wie beispielsweise E/A-Geräte, Antriebe, Messumformer etc. Sie besitzen keine Buszugriffsberechtigung und dürfen empfangene Daten nur quittieren und auf Anforderungen durch den Server-Teilnehmer Daten übermitteln.

Bei Server-Client-Systemen führt der Server-Teilnehmer in der Regel zyklisch Steuerungsprozesse durch, um auf der Grundlage von Eingangsdaten von Client-Teilnehmern Ausgangsdaten für diese und/oder andere Client-Teilnehmer zu erzeugen.

Der Server-Teilnehmer verschickt nach Abschluss eines Steuerprozesszyklus die Ausgangsdaten in Form von Ethernet-Telegrammen auf dem Feldbus, wobei die Client-Teilnehmer die dem jeweiligen Client-Teilnehmer zugeordneten Ausgangsdaten aus den Ethernet-Telegrammen entnehmen und mit diesen Ausgangsdaten einen lokalen Teilnehmerprozess ausführen. Die von dem lokalen Teilnehmerprozess ermittelten Daten werden dann wiederum vom Client-Teilnehmer an den Server-Teilnehmer übertragen und anschließend als Eingangsdaten für den nächsten Steuerprozesszyklus vom Server-Teilnehmer genutzt.

Beim Einsatz des echtzeitfähigen EtherCAT-Protokolls im Rahmen im Rahmen eines Server-Client-Systems werden die Ethernet-Telegramme von den Client-Teilnehmern im Durchlauf verarbeitet. Jedem Client-Teilnehmer am Feldbus ist dazu im Nutzdaten-Bereich des Ethernet-Telegramms ein eigener Datenblock-Bereich zugeordnet.

Statt mit einer Server-Client-Auslegung kann eine Feldbussystem auch mit einem Provider-Consumer-Modell betrieben werden. Beim Provider-Consumer-Modell bietet jeder Teilnehmer d.h. sowohl die Zentralsteuerung als auch die Feldgeräte am Feldbus Daten an, die von einem oder mehreren der anderen Teilnehmer angefordert werden können. Das Anbieten der Daten erfolgt jeweils zyklisch. Das echtzeitfähige PROFINET-Protokoll nutzt das Provider-Consumer-Modell zum Ethernet-Telegrammaustausch. Die Daten im Nutzdaten-Bereich des Ethernet-Telegramms sind dann für den jeweils in der Zieladresse genannten Consumer-Teilnehmer bestimmt.

Schnelle Ethernet-basierte Feldbussysteme, im Weiteren auch als Industrial-Ethernet bezeichnet, ermöglichen mit Hilfe eines Twisted-Pair-Kabels mit wenigstens 4 Adern als physikalische Schicht Übertragungsraten vom mehr als 10 Mbit/s. In Automatisierungssystemen wird das Industrial-Ethernet deshalb bei Ethernet-Geräten wie Antrieben, Durchflussmessern, Analysatoren und Motorsteuerungen als Teilnehmer am Feldbus eingesetzt, die mit wenigstens 4 Adern betrieben werden.

Um auch bei 2-Draht-Geräten wie Sensoren und Aktoren, die im Automatisierungssystem herkömmlicherweise über Analogschnittstellen oder Feldbusse wie I/O-Link oder HART (Highway Addressable Remote Transducer) mit einer eingeschränkten Übertragungsrate angebunden sind, den Ethernet-Standard einsetzen zu können, wurde das Ethernet mit einem Advanced Physical Layer, im Weiteren als Ethernet-APL bezeichnet, entwickelt.

Ethernet-APL ist eine erweiterte physikalische Schicht für Single-Pair-Ethernet (SPE), die auf 10 BASE-T1L erfolgt, um bei Kabellängen von bis zu 1000 m mit 10 MBit/s im Vollduplex-Modus kommunizieren zu können. Ethernet-APL als physikalische Schicht ist dabei in der Lage, EtherNet/IP, HART-IP, OPC-UA, PROFINET oder andere übergeordnete Ethernet-Protokolle zu unterstützen.

Die Implementierung von Ethernet-APL in Feldgeräten erfordert eine Anpassung in der Geräte-Hardware hinsichtlich des Physical Layer und der Geräte-Software hinsichtlich des Protokollstapels. Deshalb ist es wünschenswert, nicht erweiterte Feldgeräte weiterhin alternativ über Analogschnittstelle oder Feldbusse wie I/O-Link oder HART in das Automatisierungssystem einbinden zu können.

Im Vermittler sind die beiden Ethernet-Medientypen durch die zwischengeschaltete Vermittler-Steuereinheit vollständig voneinander getrennt. Die Regelung des Datenaustausches zwischen der ersten Anschluss-Schnittstelle, im Weiteren auch als Industrial-Ethernet-Port bezeichnet, und der zweiten Anschluss-Schnittstelle, im Weiteren auch als Ethernet-APL-Port bezeichnet, wird durch die Vermittler-Steuereinheit geregelt, wodurch ein hoher Determinismus erreicht wird. Die Vermittlerauslegung verhindert so Störungen durch Querverkehr, insbesondere dann, wenn mehrere Ethernet-APL-Ports vorgesehen sind.

Um Industrial-Ethernet-Feldbussysteme, bei denen die Teilnehmer Ethernet-Telegramme bei Übertragungsraten vom mehr als 10 Mbit/s in der Regel mit einem Twisted-Pair-Kabel mit wenigstens 4 Adern zur Ethernet-Telegramm-Übertragung als physikalische Schicht austauschen, mit Ethernet-APL-Feldgeräten, die für die Kommunikation ein zweiadriges Ethernet-Kabel mit einer Übertragungsrate von 10 Mbit/s verwenden, zu verbinden, wird ein Vermittler eingesetzt, der eine Umsetzung zwischen den unterschiedlichen physikalischen Schichten ermöglicht.

Der Vermittler weist hierzu eine erste Anschluss-Schnittstelle für das Industrial-Ethernet mit einer Übertragungsrate von mehr als 10 Mbit/s, im Weiteren auch als Industrial-Ethernet-Port bezeichnet, und eine mit dem Industrial-Ethernet-Port verbundene Industrial-Ethernet-Anschalteinheit auf. Ferner umfasst der Vermittler wenigstens eine zweite Anschluss-Schnittstelle für das Ethernet APL (10 Base-T1L) mit einer Übertragungsrate von 10 Mbit/s auf einem Single-Pair-Ethernet (SPE)-Kabel, im Weiteren auch als Ethernet-APL-Port bezeichnet, und eine mit dem Ethernet-APL-Port verbundene Ethernet-APL-Anschalteinheit.

Im Vermittler ist weiterhin eine Vermittler-Steuereinheit, die ein Industrial-Ethernet-Protokollmodul, wenigstens ein Ethernet-APL-Protokollmodul und ein mit dem Industrial-Ethernet-Protokollmodul und dem wenigstens einen Ethernet-APL-Protokollmodul verbundenes Übersetzer-Modul aufweist, eine erste SPI (Serial Peripheral Interface)-Schnittstelle, die die Industrial-Ethernet-Anschalteinheit mit dem Industrial-Ethernet-Protokollmodul der Vermittler-Steuereinheit verbindet, und eine weitere SPI-Schnittstelle, die die Ethernet-APL-Anschalteinheit mit dem wenigstens einen Ethernet-APL-Protokollmodul der Vermittler-Steuereinheit verbindet, vorgesehen.

Die Industrial-Ethernet-Anschalteinheit verarbeitet Industrial-Ethernet-Daten aus von dem Industrial-Ethernet-Port übertragenen Industrial-Ethernet-Telegrammen und tauscht die Industrial-Ethernet-Daten über die erste SPI-Schnittstelle mit dem Industrial-Ethernet-Protokollmodul der Vermittler-Steuereinheit aus. Das Industrial-Ethernet-Protokollmodul interpretiert die über die erste SPI-Schnittstelle zur Verfügung gestellten Industrial-Ethernet-Daten und ordnet die Industrial-Ethernet-Daten Industrial-Ethernet-Diensten zu.

Die wenigstens eine Ethernet-APL-Anschalteinheit verarbeitet Ethernet-APL-Daten aus von dem wenigstens einen Ethernet-APL-Port übertragenen Ethernet-APL-Telegrammen und tauscht die Ethernet-APL-Daten über die weitere SPI-Schnittstelle mit dem wenigstens einen Ethernet-APL-Protokollmodul der Vermittler-Steuereinheit aus. Das wenigstens eine Ethernet-APL-Protokollmodul interpretiert die über die weitere SPI-Schnittstelle zur Verfügung gestellten Ethernet-APL-Daten und ordnet die Ethernet-APL-Daten Ethernet-APL-Diensten zu.

Das Übersetzer-Modul verbindet die Industrial-Ethernet-Dienste und die Ethernet-APL-Dienste miteinander und koordiniert die Industrial-Ethernet-Dienste und die Ethernet-APL-Dienste zeitlich.

Der Vermittler ermöglicht es, dass von einem Server-Teilnehmer die Nutzdaten für die Ethernet-APL-Feldgeräte, die an den Vermittler angeschlossen sind, gesammelt in einem Ethernet-Telegramm übertragen werden, um nicht für jedes Ethernet-APL-Feldgerät einen Header beziehungsweise einen Trailer vorsehen zu müssen. Auch ist die minimale Telegrammgröße von 64 Byte für Ethernet-Telegramme so nicht erforderlich. Das spart Telegrammverkehr und erhöht damit auch die Performance des Automatisierungssystems.

Im Vermittler sind die beiden Ethernet-Medientypen durch die zwischengeschaltete Vermittler-Steuereinheit vollständig voneinander getrennt. Die Regelung des Datenaustausches zwischen dem Industrial-Ethernet-Port und dem Ethernet-APL-Port wird durch die Vermittler-Steuereinheit geregelt, wodurch ein hoher Determinismus erreicht wird. Die Vermittlerauslegung verhindert so Störungen durch Querverkehr, insbesondere dann, wenn mehrere Ethernet-APL-Ports vorgesehen sind.

Im Übersetzer-Modul der Vermittler-Steuereinheit kann eine Firewall integriert werden, um unerwünschte Kommunikation zu filtern und/oder zu verhindern. Hierdurch wird eine verbesserte Sicherheit erreicht. Die gesamte Kommunikation zwischen dem Server-Teilnehmer und den Ethernet-APL-Feldgeräten erfolgt über die Vermittler-Steuereinheit und damit über die Firewall.

Für die Ethernet-APL Kommunikation zu den Ethernet-APL-Feldgerät können im Ethernet-APL-Protokollmodul des Vermittlers unterschiedlichste übergeordnete Ethernet-Protokolle wie EtherNet/IP, HART-IP, OPC-UA, PROFINET etc. verwendet werden, was eine hohe Flexibilität garantiert.

Der Vermittler wird im Folgenden für ein Automatisierungssystem erläutert, bei dem das echtzeitfähige EtherCAT-Protokoll zur Interpretation der Daten im Nutzdatenblock der Ethernet-Telegramme eingesetzt wird.

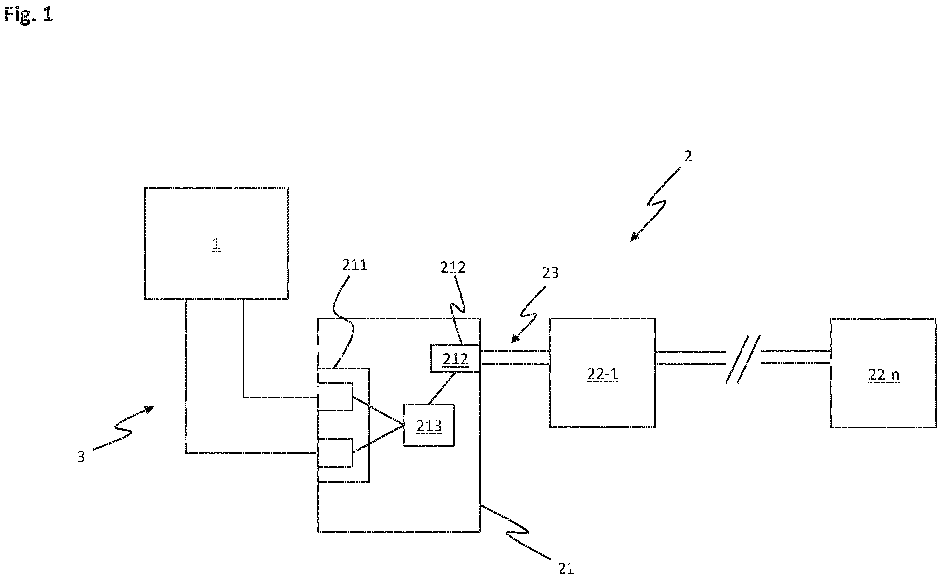

Figur 1 zeigt schematisch die Grundstruktur des Automatisierungssystems mit einem Server-Teilnehmer 1, der die Steuerungsebene bildet, und einem Client-Teilnehmer 2, der die Sensor/Aktorebene repräsentiert, wobei der Server-Teilnehmer 1 und der Client-Teilnehmer 2 über einen seriellen Feldbus 3, welcher hier als Industrial-Ethernet Feldbus ausgebildet ist, verbunden sind. Das Übertragungsmedium kann beispielsweise ein 4-Draht-Twisted-Pair-Kabel oder ein Glasfaserkabel sein. Die Darstellung nur eines Server-Teilnehmers beziehungsweise nur eines Client-Teilnehmers in Fig. 1 ist nicht einschränkend zu verstehen. Über das Industrial-Ethernet-Netzwerken können immer eine Mehrzahl von Server-Teilnehmern beziehungsweise Client-Teilnehmern miteinander verbunden werden.

Die Verwendung des EtherCAT-Protokolls im Automatisierungssystem zur Interpretation der Daten im Nutzdatenblock der Ethernet-Telegramme wird im Type-Feld im Header des Ethernet-Telegramms angezeigt. Grundsätzlich ist der Einsatz jedes bekannten echtzeitfähigen beziehungsweise nicht-echtzeitfähigen Feldbussystems zur Verarbeitung der Daten im Nutzdatenblock des Ethernet-Telegramms möglich.

Bei dem in Fig. 1 gezeigten Automatisierungssystem ist in dem das EtherCAT-Protokoll einsetzenden Client-Teilnehmer 2 ein Netzwerk-Koppler 21 vorgesehen, der eine externe Schnittstelle 211 zur Anbindung an den seriellen Feldbus 3 aufweist. Die externe Schnittstelle 211 des Netzwerk-Kopplers 1 ist mit einer Empfangseinheit RX zum Empfang eines Ethernet-Telegramms vom Übertragungsmedium des seriellen Feldbusses 3 und einer Sendeeinheit TX zum Senden eines Ethernet-Telegramms auf dem Übertragungsmedium des seriellen Feldbusses 3 ausgestattet.

Der Netzwerk-Koppler 21 ist weiter über eine interne Schnittstelle 212 an eine Reihe von EtherCAT-Teilnehmern 22, die als EtherCAT-Einheiten 22-1 bis 22-n gekennzeichnet sind, über einen ringförmigen Übertragungsweg 23 angeschlossen. Der ringförmige Übertragungsweg 23 schließt die EtherCAT-Einheit 22-1 bis 22-n zu einer Ringtopologie zusammen. Eine oder mehrere EtherCAT-Einheiten 22-1 bis 22-n können dabei ein Vermittler sein, um Ethernet-APL-Feldgeräten anzubinden.

Der ringförmige Übertragungsweg 23 kann eine einfache und auch billige 4-Draht-Übertragungsphysik auf der Basis von Low Voltage Differential Signaling (LVDS) mit geringer Reichweite aufweisen. Um das Ethernet-Telegramm von der Übertragungsphysik des seriellen Feldbusses 3 auf die Übertragungsphysik des ringförmigen Übertragungsweges 23 umzusetzen, ist im Netzwerk-Koppler 21 eine Koppler-Anschaltung 213 vorgesehen, die zwischen der externen Schnittstelle 211 und internen Schnittstelle 212 des Netzwerk-Kopplers 21 angeordnet ist.

Die Datenübertragung in der Ringtopologie erfolgt dabei ausgehend vom Netzwerk-Koppler 21 zur ersten EtherCAT-Einheit 22-1 und von dort bis zur letzten EtherCAT-Einheit 22-n und dann zurück zum Netzwerk-Koppler 21.

Ein vom Netzwerk-Koppler 21 empfangenes Ethernet-Telegramm setzt sich aus dem Header mit der Empfangskennung und der Ziel- und Quelladresse, dem Nutzdaten-Bereich sowie dem Trailer zusammen. Der zwischen dem Header und dem Trailer vorgesehene Nutzdaten-Bereich enthält die für die Steuerungsaufgabe notwendigen Prozessdaten, die vorzugsweise ein gesamtes Prozessabbild wiedergeben. Die Prozessdaten sind wiederum in für die einzelnen Teilnehmer der Steuerungsaufgabe erforderlichen Datenblöcken, d. h. für die erste EtherCAT-Einheit 22-1 "Daten EtherCAT-Einheit 22-1" usw. gruppiert.

Das vom Server-Teilnehmer 1 über den seriellen Feldbus 3 versandte Ethernet-Telegramm mit den Nutzdaten für die einzelnen EtherCAT-Einheiten 22-1 bis 22-n wird durch die Empfangseinheit RX der externen Schnittstelle 211 des Netzwerk-Kopplers 21 empfangen. Das empfangene Ethernet-Telegramm wird dann von der externen Schnittstelle 211 an die interne Schnittstelle 212 im Netzwerk-Koppler 21 nach der Umsetzung von der Übertragungsphysik des seriellen Feldbusses 3 auf die Übertragungsphysik des ringförmigen Übertragungsweges 23 durch die Koppler-Anschaltung 213 weitergegeben, wobei die interne Schnittstelle 212 das Ethernet-Telegramm dann ohne nennenswerte Verzögerung auf den ringförmigen Übertragungsweg 23 ausgibt.

Jede am ringförmigen Übertragungsweg 23 angeschlossene EtherCAT-Einheit 22-1 bis 22-n entnimmt dann dem für die EtherCAT-Einheit bestimmte Datenblock im umlaufenden Ethernet-Telegramm Daten beziehungsweise fügt Daten wiederum in den Datenblock ein. Das Ethernet-Telegramm wird dann nach Durchlauf durch die letzte EtherCAT-Einheit 22-n an die internen Schnittstelle 212 des Netzwerk-Kopplers 21 zurückgesendet.

Die Koppler-Anschaltung 213 des Netzwerk-Kopplers 1 setzt das Ethernet-Telegramm von der Übertragungsphysik des ringförmigen Übertragungsweges 23 auf die Übertragungsphysik des seriellen Feldbusses 3 um und leitet das Ethernet-Telegramm dann an die externe Schnittstelle 211 weiter, die das Ethernet-Telegramm mit der Sendeeinheit TX auf den seriellen Feldbus 3 an den Server-Teilnehmer 1 schickt.

Die an dem Netzwerk-Koppler angeschlossenen EtherCAT-Einheiten werden vom Ethernet-Netzwerk als ein einzelner Standard-Ethernet-Teilnehmer angesehen. Durch die Koppler-Anschaltung im Netzwerk-Koppler wird das von dem Netzwerk-Koppler empfangene Ethernet-Telegramm ohne nennenswerte Verzögerung auf die Ringstruktur ausgegeben, so dass jede EtherCAT-Einheit Daten aus den an die jeweilige EtherCAT-Einheit gerichteten Datenblock im Ethernet-Telegramm während des Durchlaufs des Ethernet-Telegramms auf dem ringförmigen Übertragungsweg auslesen beziehungsweise Daten in den Datenblock einfügt kann. Die Vorteile dieser Vorgehensweise sind, dass aufgrund der Verarbeitung des Ethernet-Telegramms im Durchlauf keine nennenswerten Verzögerungen bei der Datenverarbeitung entstehen und somit kurze Reaktionszeiten, wie sie für eine Echtzeitanwendung erforderlich sind, eingehalten werden können.

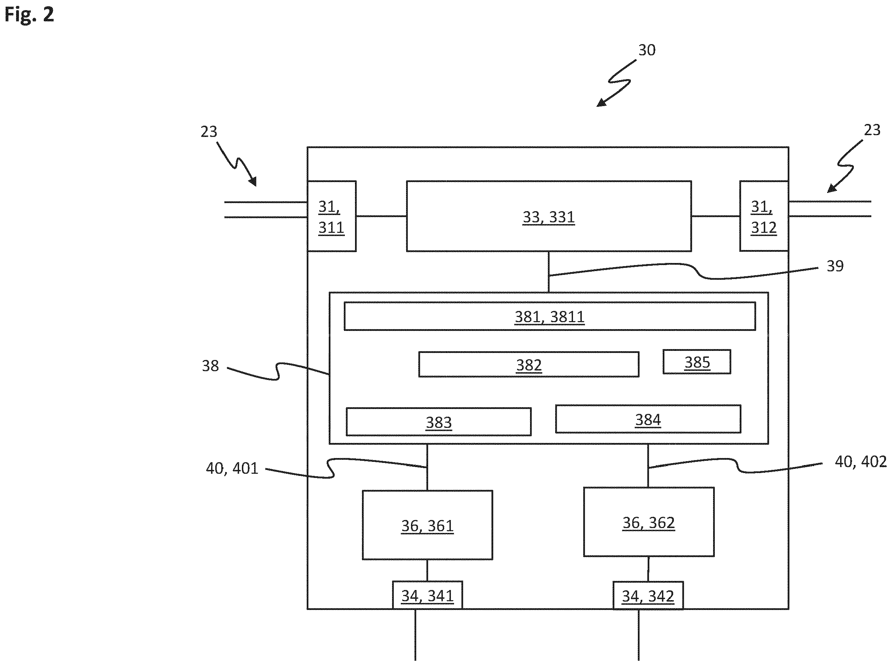

In Fig. 2 ist eine mögliche Ausgestaltung einer der EtherCAT-Einheiten 22-1 bis 22-n bei dem in Fig.1 gezeigten Automatisierungssystem als Vermittler 30 zur Anbindung von Ethernet-APL-Feldgeräten dargestellt.

Der Vermittler 30 weist zwei erste Anschluss-Schnittstellen 31 auf, die hier als ein erster EtherCAT-Port 311 und als ein zweiter EtherCAT-Port 312 ausgebildet sind und die an den ringförmigen Übertragungsweg 23 angeschlossen sind. Zwischen die zwei EtherCAT-Ports 311, 312 ist im Vermittler eine erste Anschalteinheit 33 geschaltet, die hier als EtherCAT-Anschalteinheit 331 ausgebildet ist und die die umlaufenden Ethernet-Telegramme im Durchlauf verarbeitet. Dabei entnimmt die EtherCAT-Anschalteinheit 331 Daten aus dem dem Vermittler 30 zugeordneten Datenblock im Ethernet-Telegramm während des Durchlaufs des Ethernet-Telegramms durch den Vermittler beziehungsweise fügt Daten in den Datenblock im Ethernet-Telegramm während des Durchlaufs des Ethernet-Telegramms durch den Vermittler ein.

Für die Feldebene weist der Vermittler 30 für jeden Ethernet-APL-Port eine Ethernet-APL-Anschalteinheit auf, die Ethernet-APL-Telegramme vom zugeordneten Ethernet-APL-Port aufbereitet. In Fig. 2 sind zwei zweite Anschluss-Schnittstellen 34 gezeigt, die hier als ein erster Ethernet-APL-Port 341 und als ein zweiter Ethernet-APL-Port 342 ausgebildet sind. Den beiden Ethernet-APL-Ports 341, 342 sind jeweils eine zweite Anschalteinheit 36 zugeordnet, die hier als eine erste Ethernet-APL-Anschalteinheit 361 und eine zweite Ethernet-APL-Anschalteinheit 362 ausgebildet sind. Grundsätzlich kann eine beliebige Anzahl von Ethernet-APL-Ports und zugehörigen Ethernet-APL-Anschalteinheiten vorgesehen sein. An den einzelnen Ethernet-APL-Ports sind dann Ethernet-APL-Feldgeräte (nicht gezeigt) jeweils über eine 2-Draht-Leitung angeschlossen.

Ethernet-APL-Anschalteinheiten verarbeiten Ethernet-Telegramme mit Daten von den Ethernet-APL-Feldgeräten beziehungsweise für die Ethernet-APL-Feldgeräte, die über den zugeordneten Ethernet-APL-Port empfangen beziehungsweise gesendet werden. Die Verarbeitung der Ethernet-Telegramme erfolgt dabei mit einem Ethernet-APL übergeordneten Ethernet-Protokoll, das in der Ethernet-APL-Anschalteinheit implementiert und in der beschriebenen Ausführungsform PROFINET ist.

Im Vermittler 30 ist weiterhin eine Vermittler-Steuereinheit 38 vorgesehen, die über eine erste SPI (Serial Peripheral Interface)-Schnittstelle 39 mit der EtherCAT-Anschalteinheit und über zwei weitere SPI-Schnittstellen 40, eine zweite SPI-Schnittstelle 401 und eine dritte SPI-Schnittstelle 402 mit den zwei Ethernet-APL-Anschalteinheiten 361, 362 verbunden ist.

Die Vermittler-Steuereinheit 38 enthält als Softwaremodule ein Industrial-Ethernet-Protokollmodul 381, ein Übersetzer-Modul 382, im Weiteren auch als Gateway-Modul bezeichnet, und zwei Ethernet-APL-Protokollmodule, ein erstes Ethernet-APL-Protokollmodul 383 und ein zweites Ethernet-APL-Protokollmodul 384, die jeweils einer Ethernet-APL-Anschalteinheit zugeordnet sind.

Im Industrial-Ethernet-Protokollmodul 381, welches hier als EtherCAT-Protokollmodul 3811 ausgebildet ist, werden die über die erste SPI-Schnittstelle 39 zur Verfügung gestellten EtherCAT-Datenblöcke interpretiert und in einzelne Dienste aufteilt. Die zwei Ethernet-APL-Protokollmodule 383, 384 interpretieren jeweils die über die zweite und dritte SPI-Schnittstelle 401, 402 zur Verfügung gestellten Ethernet-APL-Daten und ordnen sie einzelnen Diensten zu. Das zwischen dem EtherCAT-Protokollmodul 3811 und den zwei Ethernet-APL-Protokollmodulen 383, 384 angeordnete Gateway-Modul 382 verbindet die einzelnen Dienste und koordiniert die Dienste zeitlich, damit die Dienste sich nicht gegenseitig stören.

Die Vermittler-Steuereinheit 38 ist grundsätzlich so konfiguriert, dass er keine Daten zwischen Ethernet-APL-Ports weiterleitet. Aus Sicht des Vermittlers liegen immer physikalisch völlig getrennte Ethernet-APL-Ports vor.

Da sämtliche Kommunikation und alle Dienste über das Gateway-Modul laufen, lassen sich dort auch Firewall-Funktionen implementieren. Eine solche Firewall-Einheit 385 kann zusätzlich in die Vermittler-Steuereinheit 38 integriert sein und, wie in Fig. 2 gezeigt, als weiteres Softwaremodul vorliegen.

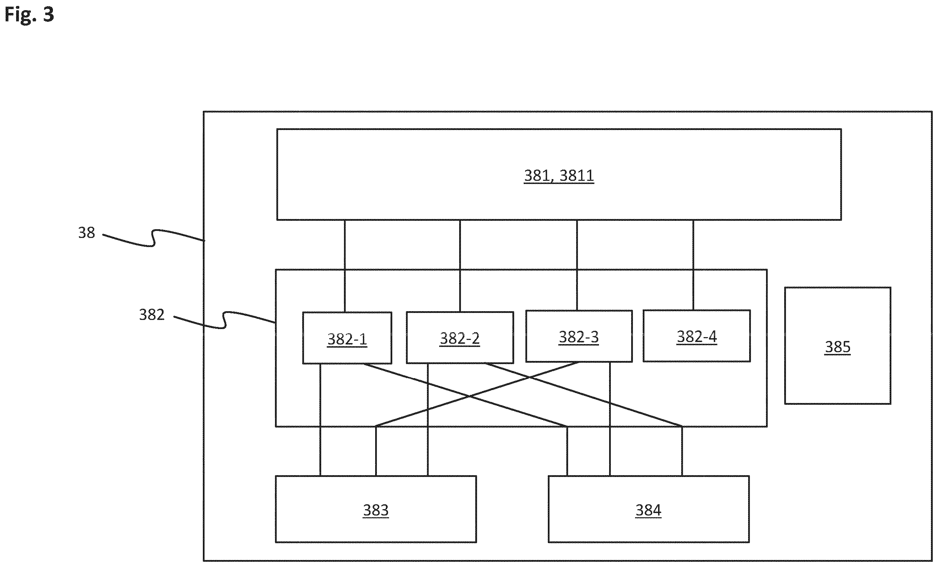

In Fig. 3 ist der Aufbau der Vermittler-Steuereinheit 38 genauer dargestellt, wobei die Datenflüsse zwischen den Softwaremodulen in der Vermittler-Steuereinheit 38 eingezeichnet sind.

Das EtherCAT-Protokollmodul 3811 der Vermittler-Steuereinheit 38 ist mit einem EtherCAT-Protokoll-Stack versehen. Der EtherCAT-Protokoll-Stack nimmt die über die erste SPI-Schnittstelle von der EtherCAT-Anschalteinheit empfangenen EtherCAT-Datenblöcke an, entpackt die EtherCAT-Datenblöcke und gibt die EtherCAT-Datenblöcke enthalten Daten sortiert nach verschiedenen eingerichteten Diensten weiter an das Gateway-Modul.

Das erste und zweite Ethernet-APL-Protokollmodul 383, 384 der Vermittler-Steuereinheit 38 sind jeweils mit einem Ethernet-APL-Protokoll-Stack versehen, der das Ethernet-APL übergeordnete Ethernet-Protokoll, in der beschriebenen Ausführungsform PROFINET nutzt. Der Ethernet-APL-Protokoll-Stack verarbeitet die über die jeweils zugeordnete SPI-Schnittstelle von der entsprechenden Ethernet-APL-Anschalteinheit empfangenen Nutzdaten der Ethernet-Telegramme und übergibt die Daten sortiert nach den verschiedenen eingerichteten Diensten an das Gateway-Modul.

Das Gateway-Modul 382 enthält für die einzelnen Dienste zugeordnete Dienste-Filter. In der Ausführungsform in Fig. 3 sind vier Dienst-Filter vorgesehen, der Steuerzyklus-Dienst-Filter 382-1, der CAN over EtherCAT (CoE)-Dienst-Filter 382-2, der ADS over EtherCAT (AoE)-Dienst-Filter 382-3 und der Ethernet over EtherCAT (EoE)-Dienst-Filter 382-4. Die in Fig. 3 gezeigten Dienst-Filter soll nicht einschränkend verstanden werden. Grundsätzlich können weitere Dienst-Filter vorgesehen sein. Insbesondere können auch mehr oder weniger Dienst-Filter vorhanden sein.

Bei den aus den EtherCAT-Datenblöcken entnommenen zyklischen Steuerdaten sind Ethernet-APL-Port-Informationen enthalten, so dass der Steuerzyklus-Dienst-Filter 382-1 die entsprechenden Daten direkt an das entsprechende Ethernet-APL-Protokollmodul schicken kann, das dem Ethernet-APL-Port zugeordnet ist. Das Ethernet-APL-Protokollmodul verpackt dann die zyklischen Steuerdaten in ein Ethernet-Telegramm und leitet das Ethernet-Telegramm über die jeweils zugeordnete SPI-Schnittstelle an die entsprechende Ethernet-APL-Anschalteinheit weiter, die das Ethernet-Telegramm auf dem mit der Ethernet-APL-Anschalteinheit verbundenen Ethernet-APL-Port ausgibt.

Die aus den EtherCAT-Datenblöcken entnommenen CoE-Daten sind azyklische Daten, die in verschiedenen Objekten abgelegt sind, wobei unter anderem auch Objekte zur Konfiguration der Ethernet-APL-Protokollmodule gibt. Dabei ist festgelegt, welche Objekte für die Konfiguration des ersten Ethernet-APL-Protokollmoduls 383 und welche für die Konfiguration des zweiten Ethernet-APL-Protokollmoduls 384 dienen, so dass der CoE-Dienst-Filter 382-2 die Objekte filtern und direkt an das entsprechenden Ethernet-APL-Protokollmodule weiterleiten kann.

Der AoE-Dienst ist ein frei definierbarer azyklischer Dienst, wobei festgelegt ist, wie azyklische Ethernet-APL-Dienste auf den AoE-Dienst abgebildet werden. Die Abbildung enthält dabei auch Adressinformationen, die es dem AoE-Dienst-Filter 382-3 im Gateway-Modul 382 ermöglichen, die Ethernet-APL-Ports zu trennen und die Daten an das entsprechende Ethernet-APL-Protokollmodul weiterzuleiten. Das Ethernet-APL-Protokollmodul verpackt die azyklischen Daten dann in ein Ethernet-Telegramm und gibt das Ethernet-Telegramm an die zugeordnete Ethernet-APL-Anschalteinheit weiter, die das Ethernet-Telegramm auf dem verbundenen Ethernet-APL-Port ausgibt.

Der EoE-Dienst tunnelt Ethernet-Telegramme durch die EtherCAT azyklischen Dienste, entpackt diese und gibt die Ethernet-Telegramme an den EoE-Dienst-Filter 382-4 weiter. Der EoE-Dienst-Filter 382-4 kann dann anhand der Zieladresse, die in jedem Ethernet-Telegramm enthalten ist, den Ethernet-APL-Port herausfiltern und schickt das Ethernet-Telegramm direkt an die zugeordnete Ethernet-APL-Anschalteinheit unter Umgehung der Ethernet-APL-Protokollmodule.

Bei der Sortierung der über die jeweils zugeordnete SPI-Schnittstelle von der entsprechenden Ethernet-APL-Anschalteinheit empfangenen Nutzdaten der Ethernet-Telegramme durch die ersten und zweiten Ethernet-APL-Protokollmodule 383, 384 der Vermittler-Steuereinheit 38 müssen die Dienst-Filter dann keine Portzuordnung vornehmen, da nur ein einzelne EtherCAT-Anschalteinheit vorgesehen ist.

Die Firewall-Einheit 385 ist mit dem Gateway-Modul 382 verbunden und kann die Datenflüsse aller Dienst-Filter auf der Grundlage von Sicherheitsvorgaben prüfen und dann einen korrumpierten Datenfluss gegebenenfalls blockieren.

Ein Datenfluss vom Server-Teilnehmer 1 bis zu einem an den ersten Ethernet-APL-Port 341 angeschlossenen Ethernet-APL-Aktor (nicht gezeigt) würde wie folgt durchgeführt werden.

Die Aktor-Steuerdaten werden von dem Server-Teilnehmer 1 im Rahmen eines Steuerungsprozesses erzeugt und in einen EtherCAT-Datenblock eines Ethernet-Telegramms verpackt. Der Server-Teilnehmer 1 verschickt das Ethernet-Telegramm dann über den seriellen Feldbus 3 zum Client-Teilnehmer 2.

Der Netzwerk-Koppler 21 des Client-Teilnehmers 2 setzt das Ethernet-Telegramm dann von der Übertragungsphysik des seriellen Feldbusses 3 auf die Übertragungsphysik des ringförmigen Übertragungsweges 23 um und gibt das Ethernet-Telegramm anschließend auf dem ringförmigen Übertragungsweg 23 aus.

Der Vermittler 30 verarbeitet das umlaufende Ethernet-Telegramme im Durchlauf mit der EtherCAT-Anschalteinheit 331. Dabei entnimmt die EtherCAT-Anschalteinheit 331 den EtherCAT-Datenblock aus dem Ethernet-Telegramm und gibt den EtherCAT-Datenblock über die erste SPI-Schnittstelle 39 an das EtherCAT-Protokollmodul 3811 der Vermittler-Steuereinheit 38 weiter.

Der EtherCAT-Protokoll-Stack im EtherCAT-Protokollmodul 3811 entnimmt die Aktor-Steuerdaten und gibt die Aktor-Steuerdaten an den Steuerzyklus-Dienst-Filter 382-1 im Gateway-Modul 382 weiter.

Bei den aus dem EtherCAT-Datenblock entnommenen Aktor-Steuerdaten sind Ethernet-APL-Port-Informationen enthalten, so dass der Steuerzyklus-Dienst-Filter 382-1 die Daten direkt an das erste Ethernet-APL-Protokollmodule 383 weiterleitet, das dem ersten Ethernet-APL-Port 341 zugeordnet ist.

Das erste Ethernet-APL-Protokollmodul 383 verpackt dann die Aktor-Steuerdaten in ein Ethernet-Telegramm und leitet das Ethernet-Telegramm über die zugeordnete zweite SPI-Schnittstelle 401 an die erste Ethernet-APL-Anschalteinheit 361 weiter, die das Ethernet-Telegramm auf dem mit der ersten Ethernet-APL-Anschalteinheit 361 verbundenen ersten Ethernet-APL-Port 341, an den der Ethernet-APL-Aktor angeschlossen ist, ausgibt.

Durch eine Ausgestaltung des Vermittlers 30 als Reihenklemmen kann eine hohe Portdichte und ein kompakter Bauraum erreicht werden. Außerdem ermöglicht die Integration des Vermittlers als Reihenklemme in eine Busklemmeneinheit eine modulare und flexible Realisierung des Ethernet-APL.

Eine Busklemmeneinheit besteht aus einem Buskoppler und einer größeren Anzahl von elektronischen Reihenklemmen. Der Buskoppler verfügt über eine Schnittstelle zum Feldbus und bindet auf diese Weise die Busklemmen in die Zentralsteuerung an. Buskoppler können mit eigener Intelligenz ausgestattet sein und verfügen in kleinem Rahmen über SPS-Funktionalität, um kleinere Steuerungsaufgaben dezentral, ohne Eingriff der Zentralsteuerung abzuarbeiten.

Der Buskoppler entspricht dabei dem in Fig. 1 gezeigten Ethernet-Koppler 21 und ist das Bindeglied zwischen dem Ethernet-Protokoll auf Feldbusebene und den Reihenklemmen. Die Kommunikation zwischen dem Buskoppler und den einzelnen Reihenklemmen erfolgt dann über einen internen Ethernet-Klemmenbus, der die Reihenklemmen kabellos über Kontakte verbindet.

Der Buskoppler wandelt die Übertragungsphysik der Feldbusebene und der Reihenklemmen-Ebene ineinander um, ohne den Prozessdatenstrom zu verändern. So setzt der Buskoppler Ethernet-Telegramme im Durchlauf beispielsweise von einer Ethernet 100BASE-TX-Physik auf dem Feldbus auf den internen Ethernet-Klemmenbus um. Der interne Ethernet-Klemmenbus wird auch mit 100 Mbit/s übertragen, hat aber einen kostengünstigeren Physical Layer auf der Basis von Low Voltage Differential Signaling (LVDS).

Die Montage der Busklemmeneinheit erfolgt in einem Schaltschrank in der Regel auf einer Hutschiene. In der Busklemmeneinheit können Busklemmen mit unterschiedlichsten Signalarten beliebig aneinandergereiht werden. Auch der Austausch einzelner Busklemmen oder die nachträgliche Erweiterung der Busklemmeneinheit ist im Rahmen der systemphysikalischen Grenzen möglich.

Busklemmeneinheiten lassen sich überall dort einsetzen, wo analoge und digitale Einund Ausgänge (I/Os) verdrahtet und über einen Feldbus an eine Zentralsteuerung übertragen werden sollen. Busklemmeneinheiten ermöglichen es, die Vielzahl von unterschiedlichen Signalen von Sensoren zu bündeln und über ein einheitliches Bussignal zur Zentralsteuerung weiterzuleiten bzw. Befehle von der Zentralsteuerung an die Aktoren weiterzugeben.

Durch den Einsatz von Vermittlern in Form von Reihenklemmen innerhalb eines Busklemmenstranges ist es möglich, Signale von Unterebenen, welche über ein Ethernet-APL kommunizieren, in den übergeordneten schnellen Industrie-Ethernet-Feldbus zu übernehmen.

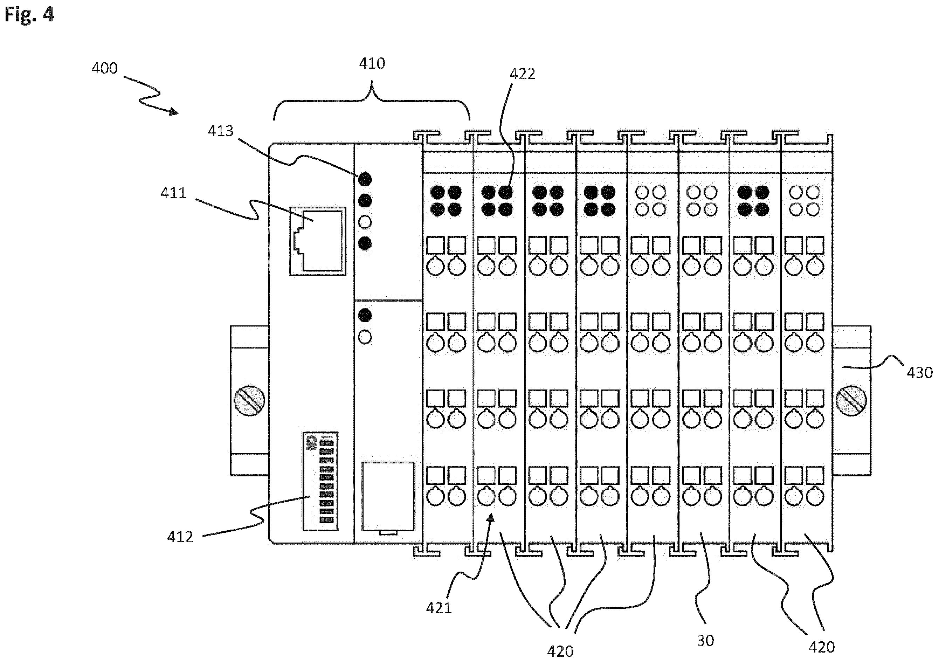

Fig. 4 zeigt eine Busklemmeneinheit 400, bei der der Vermittler 30 als Reihenklemme integriert ist. Die Busklemmeneinheit 400 hat als erstes Modul einen Buskoppler 410, der einen Steckplatz 411 für ein Buskabel (nicht gezeigt) umfassen kann. Der Steckplatz 411 kann beispielsweise als RJ45-Steckbuchse ausgebildet sein, um einen RJ45-Stecker des Buskabels aufzunehmen. Ferner hat der Buskoppler mehrere DIP (Dual in-line Package)-Schalter 412, um beispielsweise eine Adresse einzustellen. Weiterhin sind am Buskoppler mehrere LEDs 413 angeordnet, um einen Betriebszustand des Buskopplers anzuzeigen.

An den Buskoppler 410 in Fig. 4 schließen sich 7 Reihenklemmen 420 an, wobei die fünfte Reihenklemme der Vermittler 30 ist. Die in Fig. 4 gezeigte Anzahl an Reihenklemmen soll nicht einschränkend verstanden werden. Insbesondere können mehr oder weniger von den Reihenklemmen vorgesehen sein. So können bei einer Auslegung der Busklemmeneinheit bis zu 255 Reihenklemmen vorgesehen sein.

Die Reihenklemmen 420 inklusive dem Vermittler 30 in Fig. 4 sind identisch aufgebaut und weisen zwei gegenüberliegende Außenseiten auf, an denen jeweils Kontaktanordnungen vorgesehen sind, über die die Kommunikation und Spannungsversorgung erfolgt. Die Bauform der Reihenklemmen, insbesondere was die Klemmenbreite betrifft, kann dabei variieren.

Auf der Reihenklemmen-Frontseite sind Anschlusseinrichtungen für Kabel zum direkten Anschließen von Sensoren und Aktoren oder auch untergeordneten Feldbussystem ausgebildet. Bei den in Fig. 4 gezeigten Reihenklemmen 420 sind pro Reihenklemme vier 2-Draht-Anschlusseinrichtungen 421, die übereinander angeordnet sind, gezeigt. Die Reihenklemmen können aber auch mit unterschiedlichen Anschlussoptionen ausgestattet sein.

Weiterhin sind auf der Reihenklemme-Frontseite mehrere LEDs 422 angeordnet, um einen Betriebszustand der Reihenklemme anzuzeigen. Die einzelnen Reihenklemmen 420 sind zusammengesteckt und auf einer Hutschiene 430 aufgerastet. Die Hutschiene 430 kann beispielsweise mittels Schrauben in einem hier nicht gezeigten Schaltschrank montiert werden.

### Bezugszeichenliste

- 1: Server-Teilnehmer
- 2: Client-Teilnehmer
- 3: serieller Feldbus
- 21: Netzwerk-Koppler
- 211: externe Schnittstelle
- 212: interne Schnittstelle
- 22: EtherCAT-Teilnehmer
- 22-1 bis 22-n: EtherCAT-Einheit
- 23: ringförmigen Übertragungsweg
- 213: Koppler-Anschaltung
- 30: Vermittler
- 31: erste Anschluss-Schnittstelle
- 311: erster EtherCAT-Port
- 312: zweiter EtherCAT-Port
- 331: EtherCAT-Anschalteinheit
- 34: zweite Anschluss-Schnittstelle
- 341: erster Ethernet-APL-Port
- 342: zweiter Ethernet-APL-Port
- 36: zweite Anschalteinheit
- 361: erste Ethernet-APL-Anschalteinheit
- 362: zweite Ethernet-APL-Anschalteinheit
- 38: Vermittler-Steuereinheit
- 381: Industrial-Ethernet-Protokollmodul
- 3811: EtherCAT-Protokollmodul
- 382: Übersetzer-Modul
- 382-1: Steuerzyklus-Dienst-Filter
- 382-2: CoE-Dienst-Filter
- 382-3: AoE-Dienst-Filter
- 382-4: EoE-Dienst-Filter
- 383: erstes Ethernet-APL-Protokollmodul
- 384: zweites Ethernet-APL-Protokollmodul
- 385: Firewall-Einheit
- 39: erste SPI-Schnittstelle
- 40: weitere SPI-Schnittstelle
- 401: zweite SPI-Schnittstelle
- 402: dritte SPI-Schnittstelle
- 400: Busklemmeneinheit
- 410: Buskoppler
- 411: Steckplatz
- 412: DIP-Schalter
- 413: Buskoppler-LED
- 420: Reihenklemmen
- 421: 2-Draht-Anschlusseinrichtung
- 422: Reihenklemme-LED
- 430: Hutschiene

## Patentansprüche

1. Vermittler
mit einer ersten Anschluss-Schnittstelle (31) für einen ersten Ethernet-Medientyp, der ein Industrial-Ethernet mit einer Übertragungsrate von mehr als 10 Mbit/s ist,
mit einer mit der ersten Anschluss-Schnittstelle verbundenen ersten Anschalteinheit (33) für den ersten Ethernet-Medientyp,
mit wenigstens einer zweiten Anschluss-Schnittstelle (34) für einen zweiten Ethernet-Medientyp, der ein Ethernet APL (10 Base-T1L) mit einer Übertragungsrate von 10 Mbit/s auf einem Single-Pair-Ethernet (SPE)-Kabel ist,
mit wenigstens einer mit der wenigstens einen zweiten Anschluss-Schnittstelle verbundenen zweiten Anschalteinheit (36) für den zweiten Ethernet-Medientyp,
mit einer Vermittler-Steuereinheit (38), die ein Industrial-Ethernet-Protokollmodul (381), wenigstens ein Ethernet-APL-Protokollmodul (383, 384) und ein mit dem Industrial-Ethernet-Protokollmodul und dem wenigstens einen Ethernet-APL-Protokollmodul verbundenes Übersetzer-Modul (382) aufweist,
mit einer ersten SPI (Serial Peripheral Interface)-Schnittstelle (39), die die ersten Anschalteinheit (33) mit dem Industrial-Ethernet-Protokollmodul (381) der Vermittler-Steuereinheit (38) verbindet,
mit einer weiteren SPI-Schnittstelle (40), die die zweite Anschalteinheit (36) mit dem wenigstens einen Ethernet-APL-Protokollmodul (383, 384) der Vermittler-Steuereinheit (38) verbindet,
wobei die erste Anschalteinheit (33) Industrial-Ethernet-Daten aus von ersten Anschluss-Schnittstelle übertragenen Industrial-Ethernet-Telegrammen verarbeitet und über die erste SPI-Schnittstelle mit dem Industrial-Ethernet-Protokollmodul der Vermittler-Steuereinheit austauscht,
wobei das Industrial-Ethernet-Protokollmodul (381) die über die erste SPI-Schnittstelle zur Verfügung gestellten Industrial-Ethernet-Daten interpretiert und Industrial-Ethernet-Diensten zuordnet,
wobei die wenigstens eine zweite Anschalteinheit (36) Ethernet-APL-Daten aus von der wenigstens einen zweiten Anschluss-Schnittstelle übertragenen Ethernet-APL-Telegrammen verarbeitet und über die weitere SPI-Schnittstelle mit dem wenigstens einen Ethernet-APL-Protokollmodul der Vermittler-Steuereinheit (38) austauscht,
wobei das wenigstens eine Ethernet-APL-Protokollmodul (383, 384) über die weitere SPI-Schnittstelle (40) zur Verfügung gestellten Ethernet-APL-Daten interpretiert und Ethernet-APL-Diensten zuordnet, und
wobei das Übersetzer-Modul (382) die Industrial-Ethernet-Dienste und die Ethernet-APL-Dienste miteinander verbindet und zeitlich koordiniert.

2. Vermittler nach Anspruch 1, wobei das Übersetzer-Modul (382) den Diensten zugeordnete Dienst-Filter (382-1, 382-2, 382-3, 382-4) aufweist.

3. Vermittler nach Anspruch 1 oder 2, wobei die Vermittler-Steuereinheit (38) eine Firewall (385) aufweist, um unerwünschte Kommunikation zu filtern und/oder zu verhindern.

4. Vermittler nach einem der Ansprüche 1 bis 3, wobei im Ethernet-APL-Protokollmodul (383, 384) des Vermittlers (30) ein übergeordnetes Ethernet-Protokoll verwendet wird.

5. Vermittler nach einem der Ansprüche 1 bis 4, wobei die ersten Anschalteinheit eine EtherCAT-Anschalteinheit (33) ist, und wobei im Industrial-Ethernet-Protokollmodul (381) das EtherCAT-Protokoll verwendet wird.

6. Vermittler nach einem der Ansprüche 1 bis 5, wobei der Vermittler (30) als eine Reihenklemme (420), insbesondere als eine Mehr-Port-Reihenklemme ausgelegt ist.

7. Automatisierungssystem mit einem Server-Teilnehmer (1) und einem Vermittler nach einem der Ansprüche 1 bis 6 als Client-Teilnehmer (2).

8. Automatisierungssystem nach Anspruch 7, wobei eine Busklemmeneinheit (400) vorgesehen ist, die einen Buskoppler (411) und eine Anzahl von Reihenklemmen (420) aufweist, wobei der Vermittler (30) eine Reihenklemme ist.

## Claims

1. A mediator
having a first connecting interface (31) for a first Ethernet media type, which is an industrial Ethernet having a transmission rate of more than 10 Mbit/s,
comprising a first switch-on unit (33) connected to the first connecting interface for the first Ethernet media type,
comprising at least one second connecting interface (34) for a second Ethernet media type, which is an Ethernet APL (10 Base-T1L) having a transmission rate of 10 Mbit/s on a single-pair Ethernet (SPE) cable,
comprising at least one second switch-on unit (36) for the second Ethernet media type connected to the at least one second connecting interface,
comprising a mediator controller (38) which comprises an industrial Ethernet protocol module (381), at least one Ethernet APL protocol module (383, 384) and a translator module (382) connected to the industrial Ethernet protocol module and the at least one Ethernet APL protocol module,
comprising a first SPI (Serial Peripheral Interface) interface (39), which connects the first switch-on unit (33) to the industrial Ethernet protocol module (381) of the mediator controller (38),
comprising a further SPI interface (40), which connects the second switch-on unit (36) to the at least one Ethernet APL protocol module (383, 384) of the mediator controller (38), the first switch-on unit (33) processing Industrial Ethernet data from Industrial Ethernet telegrams transmitted by the first connecting interface and exchanging them with the Industrial Ethernet protocol module of the mediator controller via the first SPI interface, wherein the Industrial Ethernet protocol module (381) interprets the Industrial Ethernet data made available via the first SPI interface and allocates Industrial Ethernet services, wherein the at least one second switch-on unit (36) processes Ethernet APL data from Ethernet APL telegrams transmitted by the at least one second connecting interface and exchanges them via the further SPI interface with the at least one Ethernet APL protocol module of the mediator controller (38),
wherein the at least one Ethernet APL protocol module (383, 384) interprets Ethernet APL data made available via the further SPI interface (40) and assigns Ethernet APL services, and
wherein the translator module (382) connects the Industrial Ethernet services and the Ethernet APL services to each other and coordinates them in time.

2. The mediator according to claim 1, wherein the translator module (382) comprises service filters (382-1, 382-2, 382-3, 382-4) allocated to the services.

3. The mediator according to claim 1 or 2, wherein the mediator controller (38) comprises a firewall (385) to filter and/or to prevent unwanted communication.

4. The mediator according to any one of claims 1 to 3, wherein a super-ordinate Ethernet protocol is used in the Ethernet APL protocol module (383, 384) of the mediator (30).

5. The mediator according to any one of claims 1 to 4, wherein the first switch-on unit is an EtherCAT switch-on unit (33), and wherein the EtherCAT protocol is used in the Industrial Ethernet protocol module (381).

6. The mediator according to any one of claims 1 to 5, wherein the mediator (30) is embodied as a terminal block (420), in particular as a multi-port terminal block.

7. An automation system comprising a server subscriber (1) and a mediator according to any one of claims 1 to 6 as client subscriber (2).

8. The automation system according to claim 7, wherein a bus terminal unit (400) is provided which comprises a bus coupler (411) and a number of terminal blocks (420), wherein the mediator (30) is a terminal block.

## Revendications

1. Adaptateur intermédiaire
comprenant une première interface de raccordement (31) pour un premier type de support Ethernet, qui est un Ethernet industriel avec un débit de transmission supérieur à 10 Mbit/s,
comprenant une première unité de connexion (33), connectée à la première interface de raccordement, pour le premier type de support Ethernet,
comprenant au moins une deuxième interface de raccordement (34) pour un deuxième type de support Ethernet, qui est un Ethernet APL (10 base-T1L) avec un débit de transmission de 10 Mbit/s sur un câble Ethernet à paire unique (SPE),
comprenant au moins une deuxième unité de connexion (36), connectée à la deuxième interface de raccordement, pour le deuxième type de support Ethernet,
comprenant une unité de commande d'adaptateur intermédiaire (38), qui possède un module de protocole Ethernet industriel (381), au moins un module de protocole Ethernet APL (383, 384) et un module traducteur (382) connecté au module de protocole Ethernet industriel et à l'au moins un module de protocole Ethernet APL, comprenant une première interface SPI (interface périphérique série) (39), qui relie la première unité de connexion (33) au module de protocole Ethernet industriel (381) de l'unité de commande d'adaptateur intermédiaire (38),
comprenant une interface SPI supplémentaire (40), qui relie la deuxième unité de connexion (36) à l'au moins un module de protocole Ethernet APL (383, 384) de l'unité de commande d'adaptateur intermédiaire (38),
la première unité de connexion (33) traitant des données Ethernet industriel issues de télégrammes Ethernet industriels transmis par la première interface de raccordement et les échangeant avec le module de protocole Ethernet industriel de l'unité de commande d'adaptateur intermédiaire par le biais de la première interface SPI,
le module de protocole Ethernet industriel (381) interprétant les données Ethernet industriel mises à disposition par le biais de la première interface SPI et les associant à des services Ethernet industriel,
l'au moins une deuxième unité de connexion (36) traitant des données Ethernet APL issues des télégrammes Ethernet APL transmis par l'au moins une deuxième interface de raccordement et les échangeant avec l'au moins un module de protocole Ethernet APL de l'unité de commande d'adaptateur intermédiaire (38) par le biais de l'interface SPI supplémentaire, l'au moins un module de protocole Ethernet APL (383, 384) interprétant les données Ethernet APL mises à disposition par le biais de l'interface SPI supplémentaire (40) et les associant à des services Ethernet APL, et
le module traducteur (382) connectant les services Ethernet industriel et les services Ethernet APL les uns aux autres et les coordonnant dans le temps.

2. Adaptateur intermédiaire selon la revendication 1, le module traducteur (382) possédant des filtres de service (382-1, 382-2, 382-3, 382-4) associés aux services.

3. Adaptateur intermédiaire selon la revendication 1 ou 2, l'unité de commande d'adaptateur intermédiaire (38) possédant un pare-feu (385) afin de filtrer et/ou d'empêcher une communication indésirable.

4. Adaptateur intermédiaire selon l'une des revendications 1 à 3, un protocole Ethernet de niveau supérieur étant utilisé dans le module de protocole Ethernet APL (383, 384) de l'adaptateur intermédiaire (30).

5. Adaptateur intermédiaire selon l'une des revendications 1 à 4, la première unité de connexion étant une unité de connexion EtherCAT (33), et le protocole EtherCAT étant utilisé dans le module de protocole Ethernet industriel (381).

6. Adaptateur intermédiaire selon l'une des revendications 1 à 5, l'adaptateur intermédiaire (30) étant conçu sous la forme d'une barrette de raccordement (420), en particulier sous la forme d'une barrette de raccordement à plusieurs ports.

7. Système d'automatisation comprenant un abonné serveur (1) et un adaptateur intermédiaire selon l'une des revendications 1 à 6 en tant qu'abonné client (2).

8. Système d'automatisation selon la revendication 7, une unité de borne de bus (400) étant prévue, laquelle possède un coupleur de bus (411) et un certain nombre de barrettes de raccordement (420), l'adaptateur intermédiaire (30) étant une barrette de raccordement.
